**Europäisches Patentamt**

**European Patent Office**

**Office européen des brevets**

(19)

(11)  **EP 1 498 846 A2**

(12)  **EUROPEAN PATENT APPLICATION**

(43) Date of publication:
**19.01.2005 Bulletin 2005/03**

(51) Int Cl.$^7$: **G06T 5/00**

(21) Application number: **04103396.0**

(22) Date of filing: **15.07.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **15.07.2003 KR 2003048464**

(71) Applicant: **Samsung Electronics Co., Ltd.
Suwon-si, Gyeonggi-Do 442-742 (KR)**

(72) Inventors:
 • **PARK, Yung-jun
   Gyeonggi-do (KR)**

 • **OH, Jae-hwan
   Yeongtong-gu, Suwon-shi Gyeonggi-do, (KR)**
 • **KANG, Hyun
   Padal-gu Suwon-si Gyeonggi-do (KR)**
 • **YANG, Seung-joon
   Gangnam-gu Seoul (KR)**

(74) Representative: **Read, Matthew Charles et al
Venner Shipley LLP
20 Little Britain
London EC1A 7DH (GB)**

(54)  **Luminance Controller**

(57)   An image enhancing apparatus and method in which a PDF calculation unit calculates a probability density function according to a distribution of a luminance value with respect to each pixel of an input image. An average brightness calculation unit calculates average brightness of the input image based on the probability density function and an overflow threshold adaptive to the average brightness is calculated. A BUBO unit calculates a probability density function of which a distribution is adjusted, based on the overflow threshold and a predetermined underflow threshold and a cumulative distribution function is calculated with respect to the adjusted probability density function. A CDF compensating unit compensates for an influence that the BUBO unit has on the cumulative distribution function and a mapping unit uses the compensated cumulative distribution function as a mapping function, and adjusts and outputs the luminance value with respect to each pixel of the input image.

FIG. 2

EP 1 498 846 A2

**Description**

The present invention relates to a method of, and apparatus for, controlling luminance.

According to development of technology, display apparatus have been introduced using new technologies such as organic electroluminescence (OEL), electronic paper, plasma display panels (PDP), and thin film transistor liquid crystal displays (TFT-LCD). An aim of these advanced displays is to make the total thickness of the display very small and to reproduce a vivid image. Accordingly, in order to reproduce the vivid image on the display apparatus, several image processing algorithms are used.

However, if such image processing algorithms are applied to the display and it has a panel which is inferior to the gradation display of a dark image of a cathode ray tube (CRT) using digital light processing (DLP) technology, dark images may not be displayed clearly. This darkened display is exacerbated in cases where a black/white level stretch algorithm is applied.

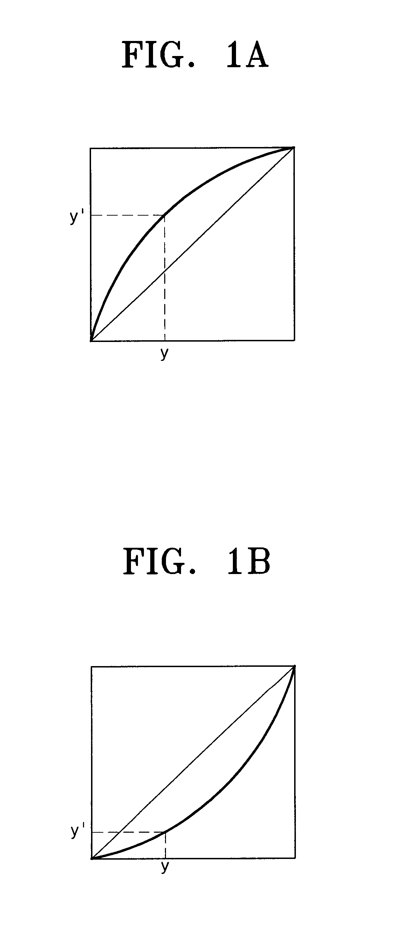

In CRTs, to display dark images correctly, an automatic beam limiter (ABL) circuit is added. The ABL circuit is used to maintain a steady brightness suitable for high performance image processing. For example, with the CRT, the brightness of the screen varies in proportion to a beam current flowing in the CRT. If a beam having an intensity greater than a predetermined level flows in the CRT, the brightness of the image becomes saturated and consequently the life-span of the CRT is shortened. On the other hand, if a beam current having an intensity less than the predetermined level flows, the ability to recognise the image reproduced by the CRT is deteriorated. To prevent this, the ABL circuit is applied to control the overflow or underflow of the beam. In other words, in the case of underflow in which the recognition ability of the reproduced image is deteriorated, a mapping function as shown in Figure 1A is used to increase the beam current and thus the luminance.

Alternatively, in case of an overflow, a mapping function as shown in Figure 1B is used to adjust the current beam so as to protect the CRT and to enhance the image recognition ability.

However, the ABL is used in CRTs that have brightness determined by a beam current. Therefore, the known method for adjusting the brightness of the dark or white area on the CRT screen is not appropriate for a thin display having no beam current. Moreover, the ABL used in the CRT uses a fixed mapping function without consideration of the average brightness of the input image. Accordingly, there is another disadvantage in that the dynamic range for the gradation display may be reduced in processing a high definition image. It is an object of the present invention to improve the luminance control in a thin display.

The present invention relates to a method of controlling luminance.

A method according to the present invention is characterised by generating a representation of the frequency of occurrence for the possible pixel luminance values of an input image signal, calculating upper and lower threshold values, adjusting the represented frequency of occurrence values in dependence on the upper and lower threshold values, generating a representation of a cumulative density function from the adjusted representation of the frequency of occurrence, normalising the representation of the cumulative density function to compensate for said adjusting, and mapping the luminance of each pixel in the input image signal in accordance with the normalised representation of the cumulative density function.

The present invention also relates to a luminance controller.

A luminance controller according to the present invention is characterised by means for generating a representation of the frequency of occurrence for the possible pixel luminance values of an input image signal, means for calculating upper and lower threshold values, adjusting means for adjusting the represented frequency of occurrence values in dependence on the upper and lower threshold values, means for generating a representation of a cumulative density function from the adjusted representation of the frequency of occurrence, means for normalising the representation of the cumulative density function to compensate for said adjusting and means for mapping the luminance of each pixel in the input image signal in accordance with the normalised representation of the cumulative density function.

An embodiment of the present invention will now be described, by way of example only, and with reference to Figures 2-5B, in which:

Figures 1A and 1B are examples of a mapping function used for a known ABL circuit;
Figure 2 is a block diagram of an image enhancing apparatus according to an embodiment of the present invention;
Figure 3 is a flow chart of an operation of an image enhancing apparatus according to an embodiment of the present invention;
Figures 4A and 4B are graphs illustrating an operation of a BUBO unit; and
Figures 5A and 5B are graphs illustrating a CDF compensation process.

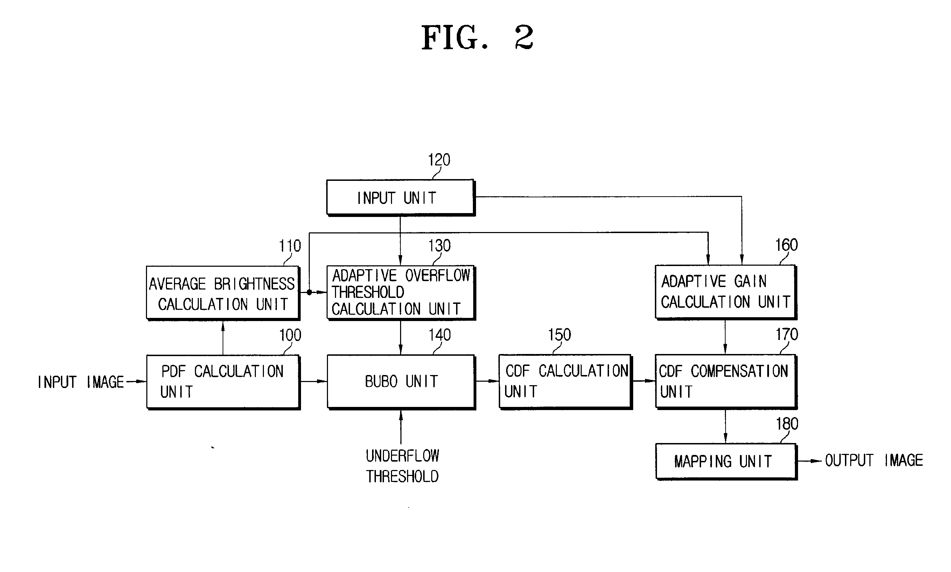

Referring to Figure 2, the image enhancing apparatus comprises a PDF calculation unit 100, an average brightness calculation unit 110, an input unit 120, an adaptive overflow threshold calculation unit 130, a BUBO unit 140, a CDF calculation unit 150, an adaptive gain calculation unit 160, a CDF compensation unit 170 and a mapping unit 180.

The PDF calculation unit 100 detects the luminance value for each pixel forming an input image. The PDF calculation unit 100 also calculates a probability density function (hereinafter, referred to as "PDF") based on the detected luminance values. The PDF indicates the probability that an irregular signal has a certain value. Although described using a PDF, the skilled person will appreciate that the PDF may be implemented as a histogram.

The average brightness calculation unit 110 calculates a mean average brightness of the input image using the PDF that is calculated in the PDF calculation unit 100.

The input unit 120 has a scale factor input which is used for the calculation of an overflow threshold and the gain by a user. This will be described later. The adaptive overflow threshold calculation unit 130 analyzes the average brightness of the input image and calculates the overflow threshold accordingly. The BUBO unit 140 adjusts the PDF which is calculated using the overflow threshold and a predetermined underflow threshold. The CDF calculation unit 150 calculates a cumulative distribution function (hereinafter, referred to as "CDF") using the adjusted PDF. The adaptive gain calculation unit 160 calculates the gain to be used for compensation in the CDF compensation unit 170. The CDF compensation unit 170 compensates for the influence that the BUBO unit 140 has on the CDF. This compensation is calculated according to the PDF adjustment. The mapping unit 180 enhances the image by adjusting a pixel value of the input image by using the compensated CDF in the CDF compensation unit 170 as a mapping function.

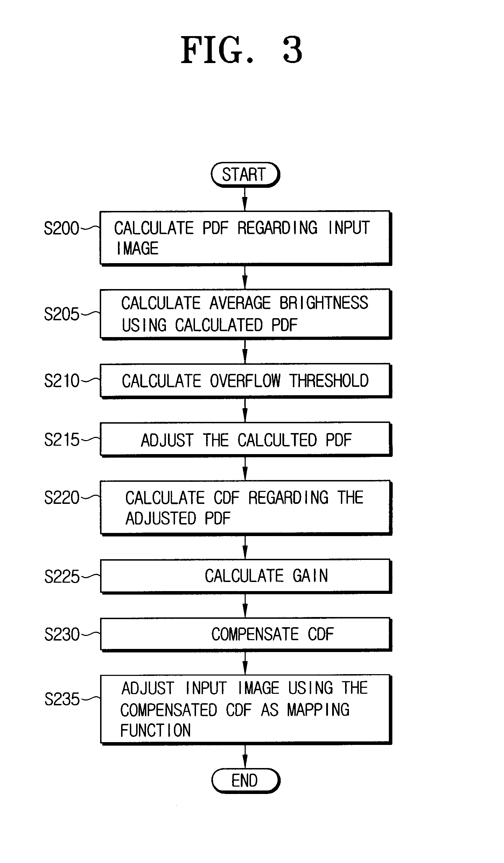

Referring to Figures 2 and 3, the operation of the image enhancing apparatus is described. First, the PDF calculation unit 100 calculates the PDF of the input image (S200). The PDF is calculated by detecting the luminance value of each pixel forming the input image and the number of pixels that correspond to each luminance value within the luminance value of the detected pixel is counted. After the PDF of the input image is calculated, the average brightness calculation unit 110 calculates the average brightness of the input image based on the calculated PDF (S205).

The adaptive overflow threshold calculation unit 130 uses the average brightness calculated in the average brightness calculation unit 110 and a first scale factor input by the user through the input unit 120 so as to calculate the variable overflow threshold in accordance with the following formula 1 (S210):

$$th\_o[k] = [1 + (128 - mean) \times \frac{sf1}{128}] \times th\_o\_low, \text{for } k < th\_low$$
$$th\_o[k] = th\_o\_high, \text{for } k \geq th\_low \tag{1}$$

wherein, 'mean' denotes the average brightness of the input image, 'sf1' denotes the first scale factor, 'th_o_high' denotes the fixed overflow threshold and 'th_low' denotes a reference value for dividing the PDF of the input image into the dark area (or the light area) and the intermediate area.

The BUBO unit 140 detects the overflow and the underflow, using the calculated overflow threshold and the predetermined underflow threshold, which is determined experimentally, and accordingly adjusts the calculated PDF (S215). In other words, the BUBO unit 140 uses the calculated overflow threshold and the predetermined underflow threshold so as to detect the overflow and the underflow from the calculated PDF in accordance with the following formula 2:

$$\text{if } pdf[k] < th\_u \text{ then underflow}$$
$$\text{if } pdf[k] > th\_o[k] \text{ then overflow} \tag{2}$$

wherein, 'th_u' denotes the underflow threshold.

Upon detecting the overflow and the underflow, the BUBO unit 140 removes values in the calculated PDF that exceed the overflow threshold and adjusts values less than the underflow threshold to the underflow threshold in accordance with the following formula 3:

$$pdf[k] = th\_u, \text{in case of the underflow}$$
$$pdf[k] = th\_o[k], \text{in case of the overflow} \tag{3}$$
$$pdf[k] = pdf[k], \text{in case of the rest}$$

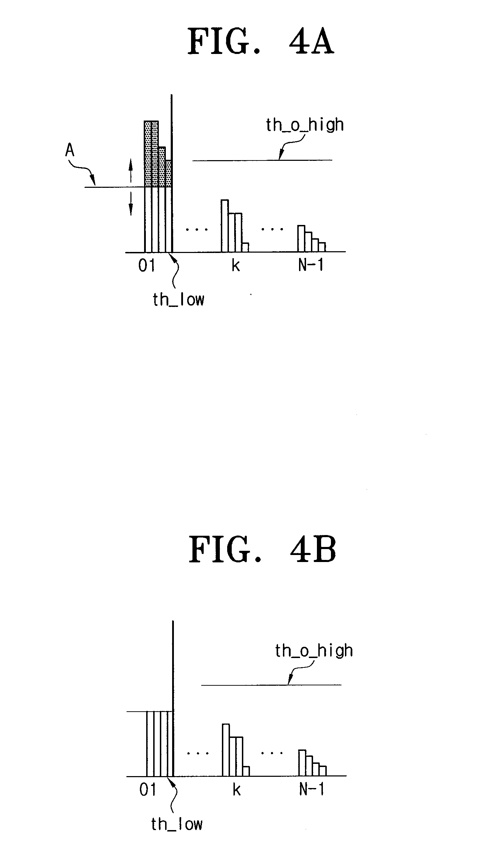

Referring to Figure 4A, 'A' indicates the overflow threshold, and the shaded areas indicate the values exceeding the overflow threshold. Figure 4B shows the PDF after having removed the values exceeding the overflow threshold. Though Figures 4A and 4B show only the values exceeding the overflow threshold for convenience, the values less than the underflow threshold may be set equal to the underflow threshold through the method described above.

After the PDF is adjusted, the CDF calculation unit 150 calculates the CDF with respect to the adjusted PDF in accordance with the following formula 4 (S220):

$$cdf[k] = \sum_{t=0}^{k} pdf[t] \qquad (4)$$

The adaptive gain calculation unit 160 calculates the gain in accordance with the following formula 5 (S225):

$$gain = [1 + (128 - mean) \times \frac{sf2}{128}] \times reg\_gain \qquad (5)$$

wherein, 'reg_gain' denotes a register setting value with respect to the gain, and 'sf2' denotes a second scale factor.

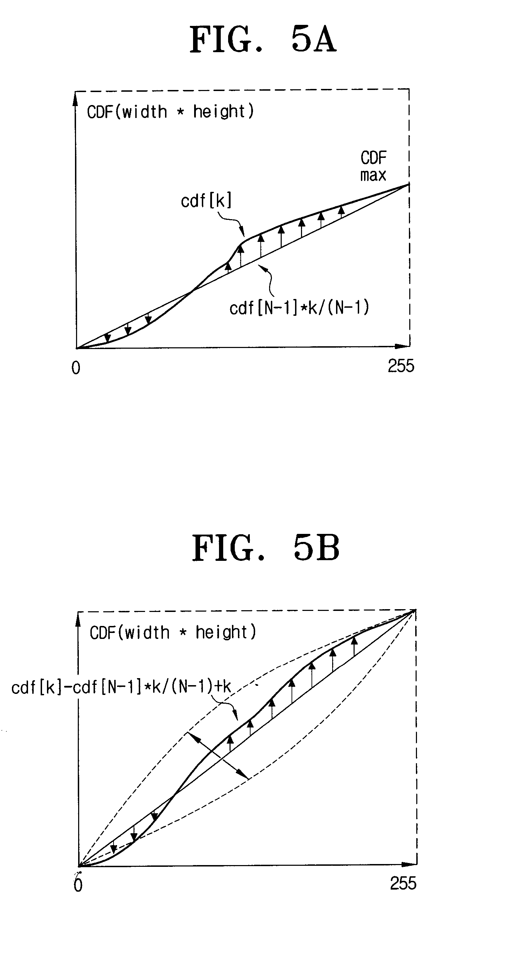

The CDF compensation unit 170 compensates for the influence that the BUBO unit 140 has on the CDF because of the PDF adjustment. The compensation is then performed using the following formulas 6. Figure 5A explains the formulas.

$$cdf[k] = [cdf[k] - \frac{cdf[N-1]}{[N-1]}] + C \cdot k$$

$$cdf[k] = \frac{(N-1)}{cdf[N-1]} \times cdf[N] \qquad (6)$$

wherein, 'C' denotes the number of pixels divided by 'N-1'.

For example, referring to equation 4 above, if the luminance value of each pixel of the input image ranges from 0 to 255, N-1=255. Further, if the luminance value of each pixel of the input image ranges from 0 to 255, 'k' of cdf (k), and pdf(k), becomes a value between 0 and 255. Alternatively, referring to equation 6, if the luminance value of each pixel of the input image ranges from 0 to 255, N=256 and C = the total number of pixels/255.

As another embodiment having the same effect as the ABL circuit, in compensating for the influence on the CDF from the BUBO unit 140, a line 'k' may be formed having a line adaptive to the average brightness of the input image or as a non-linear function. For example, in adding the difference between the CDF and a line drawn from the origin to a maximum value, to a line drawn to a normal scale, the line drawn to the normal scale may be formed as the non-linear function adapted to the average brightness of the input image. Alternatively, the non-linear function may be approximated to the line drawn to normal scale. In the two formulas given above in formula 6, used by the CDF compensation unit 170, the first formula may be added to the gain calculated in the adaptive gain calculation unit 160 in order to increase the difference between the line and the CDF, as shown in formula 7 and Figure 5B.

$$cdf[k] = gain \times [cdf[k] - \frac{cdf\ (N-1)\ *\ k}{(N-1)}] + k \qquad (7)$$

The mapping unit 180 uses the compensated CDF as the mapping function and adjusts the input image (S235) in accordance with the following formula 8:

$$g(i,j) = CDF[f(i,j)] \qquad (8)$$

wherein, 'g(i, j)' denotes an output image, and 'f(i, j)' denotes the input image.

According to the above method, the image is enhanced by adaptively improving the gradation display of the dark area in accordance with the input image signal. In one embodiment, even though the dark area, i.e., a black area is taken as the example, the method can be also applied to a white area. Hence, it is also possible to enhance the image by improving the gradation display of the white area in the input image.

As aforementioned, the method according to an embodiment of the present invention is capable of enhancing the image by adaptively improving the gradation display of the dark or light area according to the input image.

**Claims**

1. A method of controlling luminance, **characterised by:**

   generating a representation of the frequency of occurrence for the possible pixel luminance values of an input image signal;
   calculating upper and lower threshold values;
   adjusting the represented frequency of occurrence values in dependence on the upper and lower threshold values;
   generating a representation of a cumulative density function from the adjusted representation of the frequency of occurrence;
   normalising the representation of the cumulative density function to compensate for said adjusting; and
   mapping the luminance of each pixel in the input image signal in accordance with the normalised representation of the cumulative density function.

2. A method according to claim 1, comprising calculating a mean average luminance of the input image signal using said representation of frequency of occurrence, wherein said mapping also a function of said mean average.

3. A method according to either one of claim 1 or 2, wherein the represented frequency of occurrence values are adjusted to be in the range from the upper threshold to the lower threshold inclusive.

4. A luminance controller, **characterised by:**

   means (100) for generating a representation of the frequency of occurrence for the possible pixel luminance values of an input image signal;
   means (130) for calculating upper and lower threshold values;
   adjusting means (140) for adjusting the represented frequency of occurrence values in dependence on the upper and lower threshold values;
   means (150) for generating a representation of a cumulative density function from the adjusted representation of the frequency of occurrence;
   means (170) for normalising the representation of the cumulative density function to compensate for said adjusting; and
   means (180) for mapping the luminance of each pixel in the input image signal in accordance with the normalised representation of the cumulative density function.

5. A luminance controller according to claim 4, comprising:

   means (110) for calculating a mean average luminance of the input image signal using said representation of frequency of occurrence, wherein said mapping is also a function of said mean average.

6. A luminance controller according to either one of claims 4 or 5, wherein the adjusting means (140) is operable so that the represented frequency of occurrence values are adjusted to be in the range from the upper threshold to the lower threshold inclusive.

7. An image improving apparatus comprising:

   a PDF calculation unit operable to calculate a probability density function according to a distribution of a luminance value of each pixel of an input image;
   an average brightness calculation unit operable to calculate an average brightness of the input image based on the probability density function;
   an adaptive overflow threshold calculation unit operable to calculate an overflow threshold adaptive to the average brightness;

a BUBO unit operable to calculate a probability density function of adjusted distribution, based on the overflow threshold and a predetermined underflow threshold;

a CDF calculation unit operable to calculate a cumulative distribution function with respect to the adjusted probability density function;

a CDF compensating unit operable to compensate for an influence that the BUBO unit has on the cumulative distribution function in calculating the adjusted probability density function; and

a mapping unit operable to use the compensated cumulative distribution function as a mapping function, and adjust and output the luminance value with respect to each pixel of the input image.

8. The apparatus of claim 7, wherein the BUBO unit further uses a predetermined first scale factor in calculating the overflow threshold.

9. The apparatus of claim 8, wherein the BUBO unit calculates the overflow threshold in accordance with the following formulas:

$$th\_o[k] = [1 + (128 - mean) \times \frac{sf1}{128}] \times th\_o\_low, \text{ for } k < th\_low$$

$$th\_o[k] = th\_o\_high, \text{ for } k \geq th\_low$$

wherein, 'sf1' denotes the first scale factor and 'mean' denotes the average brightness.

10. The apparatus of claim 9, further comprising an input unit operable to receive the first scale factor from a user.

11. The apparatus of claim 7, wherein, in order to adjust the probability density function, the BUBO unit is operable to remove a value exceeding the overflow threshold and set a value less than the underflow threshold to the underflow threshold.

12. The apparatus of claim 7, wherein the CDF compensation unit compensates for the cumulative distribution function in accordance with the following formula:

$$cdf[k] = \frac{(N\text{-}1)}{cdf[N\text{-}1]} \times cdf[N].$$

13. The apparatus of claim 7, wherein the CDF compensation unit compensates for the cumulative distribution function in accordance with the following formula:

$$cdf[k] = [cdf[k] - \frac{cdf[N\text{-}1]}{[N\text{-}1]}] + C \cdot k$$

wherein 'C' denotes the number pixels divided by 'N-1'.

14. The apparatus of claim 7, further comprising:

an adaptive gain calculation unit to calculate a predetermined gain value, and

the CDF compensation unit is operable to compensate for the cumulative distribution function using the predetermined gain value in accordance with the following formula:

$$cdf[k] = gain \times [cdf[k] - \frac{cdf(N\text{-}1)^*k}{(N\text{-}1)}] + k.$$

15. The apparatus of claim 14, wherein the adaptive gain calculation unit is operable to calculate the gain value in accordance with the following formula:

$$gain = [1 + (128 - mean) \times \frac{sf2}{128}] \times reg\_gain$$

wherein, 'sf2' denotes a second scale factor and 'reg_gain' denotes a predetermined setting value regarding the gain.

**16.** The apparatus of claim 15, further comprising an input unit operable to receive the second scale factor from the user.

**17.** A method of enhancing an image comprising:

calculating a probability density function according to a distribution of a luminance value of each pixel of an input image;
calculating an average brightness of the input image based on probability density function;
calculating an overflow threshold adaptive to the average brightness;
calculating a probability density function of adjusted distribution, based on the overflow threshold and a predetermined underflow threshold;
calculating a cumulative distribution function with respect to the adjusted probability density function;
compensating for an influence that the BUBO unit has on the cumulative distribution function in calculating the adjusted probability density function, and calculating the compensated cumulative distribution function; and
using the compensated cumulative distribution function as a mapping function, adjusting and calculating the luminance value with respect to each pixel of the input image.

**18.** The method of claim 17, wherein, in the step of calculating the adaptive overflow threshold, a predetermined first scale factor is further used.

**19.** The method of claim 18, wherein, in the step of calculating the adaptive overflow threshold, the overflow threshold is calculated in accordance with the following formula:

$$th\_o[k] = [1 + (128 - mean) \times \frac{sf1}{128}] \times th\_o\_low, \text{ for } k < th\_low$$

$$th\_o[k] = th\_o\_high, \text{ for } k \geq th\_low$$

wherein, 'sf1' denotes the first scale factor and 'mean' denotes the average brightness.

**20.** The method of claim 19, further comprising the step of receiving the first scale factor from a user.

**21.** The method of claim 17, wherein, in the step of calculating the adaptive overflow threshold, the probability density function is adjusted in such a manner that a value exceeding the overflow threshold is removed and a value less than the underflow threshold is set to the underflow threshold.

**22.** The method of 17, wherein, in the step of calculating the compensated cumulative distribution function, the cumulative distribution function is compensated in accordance with the following formula:

$$cdf[k] = \frac{(N-1)}{cdf[N-1]} \times cdf[N].$$

**23.** The method of claim 17, wherein, in the step of calculating the compensated cumulative distribution function, the cumulative distribution function is compensated in accordance with the following formula:

$$cdf[k] = [cdf[k] - \frac{cdf[N-1]}{[N-1]}] + C \cdot k$$

wherein, 'C' denotes the number of the entire pixel divided by 'N-1'.

**24.** The method of claim 17, further comprising the step of calculating a predetermined gain value, and wherein in the step of calculating the compensated cumulative distribution function, the cumulative distribution function is compensated using the predetermined gain value in accordance with the following formula:

$$cdf[k] = gain \times [cdf[k] - \frac{cdf(n-1)^* k}{(n-1)}] + k.$$

25. The method of claim 24, wherein, in the step of calculating the gain value, the gain value is calculated in accordance with the following formula:

$$gain = [1 + (128 - mean) \times \frac{sf2}{128}] \times reg\_gain$$

wherein, 'sf2' denotes the second scale factor and 'reg_gain' denotes a predetermined setting value with respect to the gain.

26. The method of claim 25, further comprising the step of receiving the second scale factor from a user.

# FIG. 1A

# FIG. 1B

# FIG. 2

INPUT UNIT 120

AVERAGE BRIGHTNESS CALCULATION UNIT 110

ADAPTIVE OVERFLOW THRESHOLD CALCULATION UNIT 130

ADAPTIVE GAIN CALCULATION UNIT 160

INPUT IMAGE → PDF CALCULATION UNIT 100

BUBO UNIT 140

CDF CALCULATION UNIT 150

CDF COMPENSATION UNIT 170

UNDERFLOW THRESHOLD

MAPPING UNIT 180 → OUTPUT IMAGE

EP 1 498 846 A2

# FIG. 3

START

S200 — CALCULATE PDF REGARDING INPUT IMAGE

S205 — CALCULATE AVERAGE BRIGHTNESS USING CALCULATED PDF

S210 — CALCULATE OVERFLOW THRESHOLD

S215 — ADJUST THE CALCULTED PDF

S220 — CALCULATE CDF REGARDING THE ADJUSTED PDF

S225 — CALCULATE GAIN

S230 — COMPENSATE CDF

S235 — ADJUST INPUT IMAGE USING THE COMPENSATED CDF AS MAPPING FUNCTION

END

# FIG. 4A

# FIG. 4B

# FIG. 5A

CDF(width * height)

CDF max

cdf[k]

cdf[N-1]*k/(N-1)

0          255

# FIG. 5B

CDF(width * height)

cdf[k]-cdf[N-1]*k/(N-1)+k

0          255